# EUROPÄISCHE PATENTSCHRIFT

(11) **EP 0 898 360 B1**
(45) Veröffentlichungstag und Bekanntmachung des Hinweises auf die Patenterteilung: **28.08.2002**
(21) Anmeldenummer: 98115119.4
(22) Anmeldetag: 12.08.1998
(51) Int. Cl.: H02M 7/5387, H02M 1/08, G05F 1/56

(54) **Verfahren zur Steuerung eines Gleichstromumrichters mit Wechselspannungs-Zwischenkreis und Vorrichtung hierzu**
Method for controlling a DC converter with an AC intermediate circuit and arrangement therefore
Méthode pour la commande d'un survolteur à un circuit intermédiaire de tension alternative et appareil pour le même

(30) Priorität: 20.08.1997 DE 19735695; 11.02.1998 DE 19805408
(43) Veröffentlichungstag der Anmeldung: 24.02.1999
(73) Patentinhaber: Futterlieb, Erhard, Prof. Dipl.-Ing., 68259 Mannheim (DE)
(72) Erfinder: Futterlieb, Erhard, Prof. Dipl.-Ing., 68259 Mannheim (DE)
(74) Vertreter: Cohausz & Florack Patentanwälte

(56) Entgegenhaltungen:
- EP-A2- 0 605 329
- US-A- 5 446 346
- US-A- 5 614 813
- US-A- 5 657 220

## Beschreibung

### Technisches Gebiet:

Die Erfindung betrifft ein Verfahren zum Steuern eines Gleichstromumrichters mit Wechselspannungs-Zwischenkreis nach dem Prinzip des Durchflußwandlers bestehend aus einem Wechselrichter mit eingeprägter Gleichspannung, einem Transformator und einem Gleichrichter, wobei der Wechselrichter die drei Spannungszustände positive Spannung (Zustand Plus), negative Spannung (Zustand Minus) und Spannung Null (Zustand Null) liefern kann und eine Wechselspannung erzeugt, deren Perioden aus je einem Zeitintervall mit positiver und negativer Spannung und jeweils einem dazwischen liegenden Zeitintervall mit der Spannung Null bestehen, gemäß dem Oberbegriff des Anspruchs 1 sowie eine Vorrichtung hierzu gemäß dem Oberbegriff des Anspruchs 9.

### Stand der Technik:

Gleichstromumrichter mit Wechselspannungs-Zwischenkreis bestehen aus einem Wechselrichter zur Erzeugung einer Wechselspannung, einem Transformator zur Potentialtrennung und Spannungsanpassung und einem Gleichrichter zur Umwandlung der Wechselspannung in die Ausgangsgleichspannung. Derartige Gleichstromumrichter werden in vielfältiger Form in Gleichstromversorgungen verwendet. Meist ist der Wechselrichter als Wechselrichter mit eingeprägter Gleichspannung so ausgeführt, daß er die drei Spannungszustände positive Spannung (Zustand Plus), negative Spannung (Zustand Minus) und Spannung Null (Zustand Null) liefern kann und eine Wechselspannung erzeugt, deren Perioden aus je einem Zeitintervall mit positiver und negativer Spannung und jeweils einem dazwischen liegenden Zeitintervall mit der Spannung Null besteht. Die Steuerung der Ausgangsgleichspannung (Aussteuerung) des Gleichstromumrichters erfolgt meist "primärseitig" dadurch, daß bei konstanter Periodendauer die Zeitdauer des Zustands Null geändert wird. Hierfür gibt es sogar integrierte Schaltkreise, die mittels einer Sägezahnspannung und einem Zweipunktglied die Schaltzeitpunkte ermitteln. Bei geringen und langsamen Änderungen der Aussteuerungen sind diese Verfahren ausreichend. Bei großer Dynamik und inbesondere bei wiederholten impulsförmigen Änderungen der Aussteuerungen, was insbesondere bei Gleichstromumrichtern für die Elektroschweißtechnik auftritt, kommt es bei diesen bekannten Steuerverfahren zu Verlagerungen des Flusses im Transformator, die zu Sättigungserscheinungen im Transformator führen, welche wiederum unangenehme Schwingungen im System zur Folge haben können.

Diese Technik ist zum Beispiel in der DE-A1-196 34 713 beschrieben, aus der ein Verfahren zur Steuerung von wechselweise an eine Gleichspannung geschalteten Transformatoren, insbesondere von pulsweitenmodulierten Halboder Vollbrückenkonvertern oder von phasenverschiebungsgesteuerten Vollbrückenkonvertern bzw. Wechselrichtern, bekannt geworden ist, wobei entweder die Primärspule des Transformators oder die versorgende Gleichspannung wechselweise umgepolt wird. Eine Zeitdauer, über die die Primärspule positiv oder negativ an den Gleichspannungskreis angeschlossen ist, ist von einer benötigten Höhe einer Ausgangsgröße eines an einer Sekundärwicklung des Transformators, bevorzugt über einen Gleichrichter angeschlossenen Verbrauchers abhängig. Eine Zeitdauer eines unmittelbar auf eine geforderte Änderung der Ausgangsgröße generierten Impulses wird dabei nur entsprechend einem Teil der geforderten Änderung der Ausgangsgröße festgelegt.

Durch die US-A-5 675 220 ist ein Wechselrichter mit verstellbarer Ausgangsspannung bekannt geworden, vor dessen eigentlichen Wechselrichter ein indirekter Gleichstromumrichter mit Transformator geschaltet ist, wobei die Ausgangsspannung des Gleichstromumrichters durch einen zusätzlichen Gleichstromsteller eingestellt werden kann. Diese Doppelanordnung liefert eine trapezförmig gepulste Gleichspannung, welche durch den Wechselrichter in eine trapezförmige Wechselspannung umgeformt wird. Die Anstiegssteilheit des trapezförmigen Gleichspannungspulses wird dabei durch einen Glättungskondensator am Ausgang des Gleichstomstellers begrenzt, die Steilheit des Abfalls durch Eingreifen des zusätzlichen Gleichstromstellers eingestellt. Die schnellen Veränderungen in der Ausgangsspannung des Gleichstromumrichters sind dadurch auf zusätzliche Komponenten im Leistungsteil verlagert, was erhöhten Aufwand bedeutet. Mit dem eigentlichen Gleichstromumrichter wird nur die Amplitude der Trapezspannung mit begrenzter Dynamik in konventioneller Weise über eine Sägezahnspannung geregelt. Die Probleme der Sättigung des Transformators im indirekten Gleichstromumrichter werden nicht erwähnt.

### Technische Aufgabe:

Der vorliegenden Erfindung liegt die Aufgabe zu Grunde, bei einem Verfahren der eingangs genannten Gattung und einer Vorrichtung hierzu die durch dynamische Vorgänge verursachte Flußverlagerung im Transformator mit einfachen Mitteln sicher zu verhindern.

Die Lösung der Aufgabe besteht erfindungsgemäß darin, daß zur Steuerung des Wechselrichters die Schaltperiode desselben in zwei Zeitabschnitte unterteilt wird, wobei in einem Zeitabschnitt (A) die Umschaltungen vom Zustand Plus auf den Zustand Null und danach vom Zustand Null auf den Zustand Minus erfolgen und dabei das Zeitintervall vom Umschalten auf den Zustand Minus bis zum Ende des Zeitabschnitts A gleich groß vorgegeben wird wie das Zeitintervall vom Beginn des Zeitabschnitts A bis zum Umschalten auf den Zustand Null, und im anderen Zeitabschnitt (B) die Umschaltungen vom Zustand Minus auf den Zustand Null und danach vom Zustand Null auf den Zustand Plus erfolgen und dabei das Zeitintervall vom Umschalten auf den Zustand Plus bis zum Ende des Zeitabschnitts B gleich groß vorgegeben wird wie das Zeitintervall vom Beginn des Zeitabschnitts B bis zum Umschalten auf den Zustand Null, wobei entweder die Dauer der Zeitabschnitte A und B konstant gehalten wird oder die Dauer der Zeitabschnitte A und B an die Betriebserfordernisse angepaßt werden und insbesondere bei dynamischen Vorgängen die Dauer verkürzt werden, wobei auch unterschiedliche Dauern der Zeitabschnitte A und B eingestellt werden.

Somit wird die Dauer der Zeitabschnitte A und B konstant gehalten oder es werden die Dauer der Zeitabschnitte A und B an die Betriebserfordernisse angepaßt, insbesondere wird die Dauer bei dynamischen Vorgängen verkürzt, wobei auch unterschiedliche Dauern der Zeitabschnitte A und B eingestellt werden. Dabei wird die Dauer eines Zeitabschnitts auch nach der ersten Umschaltung in diesem Zeitabschnitt verändert. Bei der Verwendung von digitalen Steuerungsmitteln werden die Dauer jedes Zeitabschnitts und die beiden Umschaltzeitpunkte innerhalb dieses Zeitabschnitts laufend auf Grund eines Steuerspannungsverlaufs berechnet und mittels eines Zeitwerks eingestellt, wobei der Zeitabstand zwischen der zweiten Umschaltung bis zum Ende des Zeitabschnitts gleich groß gesetzt wird wie der Zeitabstand vom Beginn dieses Zeitabschnitt bis zur ersten Umschaltung.

Bei der Durchführung des Verfahrens mit analogen Hilfs- bzw. Steuerungsmitteln wird in der Steuerung des Wechselrichters eine symmetrische, dreieckförmige Hilfsspannung mit gleich großen Anstiegs- und Abfallzeiten und doppelter Frequenz der Wechselrichter-Ausgangsspannung erzeugt, wobei das Einschalten des Zustands Null jeweils im Schnittpunkt einer Steuerspannung mit der ansteigenden Flanke der Dreieckhilfsspannung erfolgt und die Größe der Steuerspannung im Schnittpunkt festgehalten wird und daß die darauf folgende Umschaltung auf den Zustand Plus bzw. den Zustand Minus im Schnittpunkt der festgehaltenen Spannung und der nachfolgenden abfallenden Flanke der Dreieckhilfsspannung erfolgt. Ebenso wird eine stufenförmige Steuerspannung verwendet, die nur in den Zeitpunkten des Tiefstwertes der Dreieckhilfsspannung sprunghaft geändert und dann bis zum nächsten Sprungzeitpunkt konstant gehalten wird, wobei in den Schnittpunkten der stufenförmigen Steuerspannung mit der ansteigenden Flanke der Dreieckhilfsspannungen die Umschaltungen auf den Zustand Null und in den Schnittpunkten mit der abfallenden Flanke die Umschaltung auf den Zustand Plus bzw. Minus erfolgt. Vorteilhaft wird die Steigung der Dreieckhilfsspannung in den Zeitpunkten, in denen der Minimalwert der Dreieckhilfsspannung auftritt, geändert. Die von der Steuerspannung abhängigen Umschaltzeitpunkte der Wechselrichterausgangsspannung werden mit einer digitalisierten Steuerspannung, die sich nur in den Tiefstwerten der Dreieckhilfsspannung ändert, einem Auf- und Abwärtszähler und einem digitalen Komparator erzeugt. Die Steuerspannung unterschreitet nicht einen Mindestwert der Steuernennspannung bzw. soll ihn nicht unterschreiten.

Bei einer Vorrichtung zum Steuern eines Gleichstromumrichters mit Wechselspannungs-Zwischenkreis nach dem Prinzip des Durchflußwandlers bestehend aus einem Wechselrichter mit eingeprägter Gleichspannung, einem Transformator und einem Gleichrichter, wobei der Wechselrichter die drei Spannungszustände positive Spannung (Zustand Plus), negative Spannung (Zustand Minus) und Spannung Null (Zustand Null) zu liefern imstande ist und eine Wechselspannung erzeugt, deren Perioden aus je einem Zeitintervall mit positiver und negativer Spannung und jeweils einem dazwischen liegenden Zeitintervall mit der Spannung Null bestehen, erfolgt die Steuerung des Wechselrichters in der Weise, daß die Schaltperiode des Wechselrichters in zwei Zeitabschnitte unterteilt ist, wobei in einem Zeitabschnitt (A) die Umschaltungen vom Zustand Plus auf den Zustand Null und danach vom Zustand Null auf den Zustand Minus erfolgen und dabei das Zeitintervall vom Umschalten auf den Zustand Minus bis zum Ende des Zeitabschnitts A gleich groß vorgegeben ist wie das Zeitintervall vom Beginn des Zeitabschnitts A bis zum Umschalten auf den Zustand Null, und im anderen Zeitabschnitt (B) die Umschaltungen vom Zustand Minus auf den Zustand Null und danach vom Zustand Null auf den Zustand Plus erfolgen und dabei das Zeitintervall vom Umschalten auf den Zustand Plus bis zum Ende des Zeitabschnitts B gleich groß vorgegeben ist wie das Zeitintervall vom Beginn des Zeitabschnitts B bis zum Umschalten auf den Zustand Null, wobei entweder die Dauer der Zeitabschnitte A und B konstant gehalten wird oder die Dauer der Zeitabschnitte A und B an die Betriebserfordernisse angepaßt werden und insbesondere bei dynamischen Vorgängen die Dauer verkürzt werden, wobei auch unterschiedliche Dauern der Zeitabschnitte A und B eingestellt werden.

Bei Anwendung des erfindungsgemäßen Steuerverfahrens kann vorteilhaft ein beliebiger Verlauf der Aussteuerung vorgegeben werden, ohne daß eine Verlagerung des Flusses im Transformator auftritt. Dabei ist der Aufwand für das erfindungsgemäße Steuerungsverfahren vergleichsweise gering und damit besonders wirtschaftlich.

Vorteilhaft können die von der Steuerspannung abhängigen Umschaltzeitpunkte der Wechselrichterausgangsspannung mit einer digitalisierten Steuerspannung, die sich nur in den Tiefstwerten der Dreieckhilfsspannung ändert, einem Auf- und Abwärtszähler und einem digitalen Komparator erzeugt werden. Dabei sollte die Steuerspannung einen Mindestwert der Steuernennspannung nicht unterschreiten.

Kurzbeschreibung der Zeichnung, in der zeigen:
- Fig. 1: das Prinzipschaltbild für ein System mit Gleichstromumrichter, der einen Wechselrichter in Zweipuls-Brückenschaltung und einen ungesteuerten Ausgangsgleichrichter enthält;
- Fig. 2: das Prinzipschaltbild für ein System mit Gleichstromumrichter, der einen Wechselrichter in Halbbrückenschaltung und einen ungesteuerten Ausgangsgleichrichter enthält;
- Fig. 3: den Funktionsschaltbild für eine bekanntes Steuerungsverfahren mit sägezahnförmiger Hilfsspannung;
- Fig. 4: den zeitlichen Verlauf charakteristischer Größen bei konstanter Aussteuerung mit dem Steuerverfahren entsprechend Fig. 3;
- Fig. 5: den zeitlichen Verlauf charakteristischer Größen bei impulsförmiger Aussteuerung mit dem Steuerverfahren entsprechend Fig. 3;
- Fig. 6: den zeitlichen Verlauf charakteristischer Größen bei Anwendung des erfindungsgemäßen Steuerverfahrens mit konstanter Dauer der Zeitabschnitte A und B entsprechend Anspruch 2;
- Fig. 7: den zeitlichen Verlauf charakteristischer Größen bei Anwendung des erfindungsgemäßen Steuerverfahrens mit variabler Dauer der Zeitabschnitte A und B entsprechend Anspruch 3;
- Fig. 8: das Prinzipschaltbild für eine Realisierung des Verfahrens mit analogen Hilfsmitteln entsprechend Anspruch 6;
- Fig. 9: den zeitlichen Verlauf charakteristischer Größen bei impulsförmiger Aussteuerung mit dem Steuerverfahren entsprechend Fig. 8;
- Fig. 10: das Prinzipschaltbild für eine Realisierung des Verfahrens mit analogen Hilfsmitteln entsprechend Anspruch 7 und
- Fig. 11: den zeitlichen Verlauf charakteristischer Größen bei impulsförmiger Aussteuerung mit dem Steuerverfahren entsprechend Fig. 10.

### Bevorzugte Ausführungsform der Erfindung:

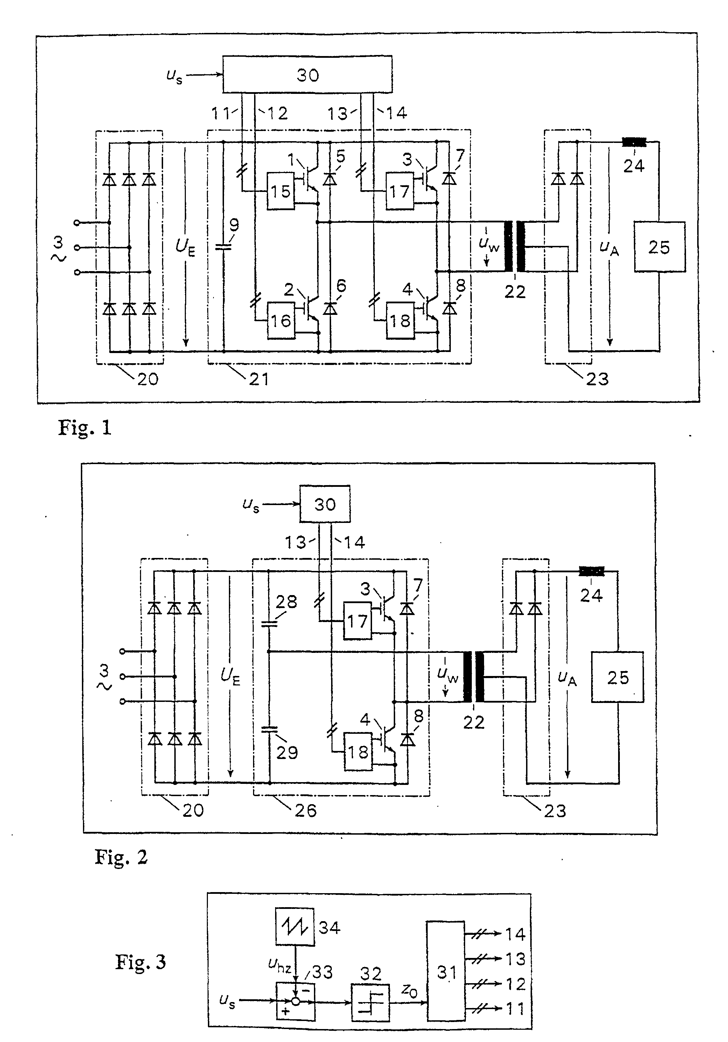

In Fig. 1 ist das Prinzipschaltbild für ein typisches System dargestellt, das einen Gleichstromumrichter mit Wechselspannungs-Zwischenkreis enthält. Der Gleichstromumrichter besteht aus dem Wechselrichter 21, dem Transformator 22 und dem Gleichrichter 23. Der Wechselrichter wird beispielsweise über einen ungesteuerten Gleichrichter 20 aus dem Drehstromnetz mit der Eingangsgleichspannung U_{E} versorgt und liefert die Wechselspannung u_{w} an die Primärseite des Transformators. Der Ausgangsgleichrichter 23 wandelt die (im Bild nicht näher gekennzeichnete) Wechselspannung auf der Sekundärseite des Transformators in die Ausgangs-Gleichspannung u_{A} um. Der Ausgangskreis besteht aus einer Induktivität 24, zur Glättung des Ausgangsgleichstroms, und der Last 25. Die Glättungsinduktivität 24 muß nicht als separierbarer Schaltungsteil vorhanden sein; oft genügen die Leitungsinduktivitäten im Ausgangskreis oder vorhandene induktive Anteile der Last selbst. Der Wechselrichter 21 arbeitet mit eingeprägter Gleichspannung, die durch den Eingangskondensator 9 geglättet wird. Er enthält ein erstes Zweigpaar mit den Transistoren 1 und 2 sowie den antiparallelen Dioden 5 und 6 und ein zweites Zweigpaar mit den Transistoren 3 und 4 sowie den antiparallelen Dioden 7 und 8. Statt der eingezeichneten IGBT-Transistoren können beliebige andere abschaltbare Bauelemente, z.B. bipolare Transistoren, MOSFET-Transistoren oder GTO-Thyristoren verwendet werden. Die Ansteuerung der Transistoren erfolgt aus der Steuereinrichtung 30 über die Steuerleitungen 11, 12, 13, 14 und die Ansteuereinheiten 15, 16, 17, 18. Der gewünschte Verlauf der Ausgangs-Gleichspannung u_{A} wird der Steuereinrichtung 30 durch die Steuerspannung uₛ vorgegeben.

Wenn die beiden Transistoren 1 und 4 eingeschaltet sind (Zustand Plus), erzeugt der Wechselrichter einen positiven Anteil der Höhe +U_{E} im Spannungsverlauf der Wechselspannung u_{w}. Während die beiden Transistoren 2 und 3 eingeschaltet sind (Zustand Minus), erzeugt der Wechselrichter einen negativen Anteil der Höhe -U_{E} im Spannungsverlauf der Wechselspannung u_{w}. Wenn die beiden Transistoren 1 und 3 oder die beiden Transistoren 2 und 4 eingeschaltet sind, entsteht ein Freilaufkreis im Wechselrichter (Zustand Null) und der Wechselrichter erzeugt einen Anteil mit Spannung Null im Spannungsverlauf der Wechselspannung u_{w}. Meistens werden die beiden Freilaufkreise abwechselnd eingeschaltet, so daß beispielsweise in einer Schaltperiode nacheinander die vier Schaltzustände 1 und 4 ein, 2 und 4 ein, 2 und 3 ein, 1 und 3 ein auftreten.

Dieses Verfahren wird als Phasenverschiebungssteuerung bezeichnet. Der Anteil der Spannung Null im Spannungsverlauf von u_{w} kann auch durch Ausschalten aller Transistoren erzeugt werden. In diesem Fall spricht man von Pulsbreitensteuerung des Wechselrichters. Das erfindungsgemäße Steuerverfahren kann sowohl beim phasenverschiebungs- als auch beim pulsbreitengesteuerten Wechselrichter angewandt werden.

Der Wechselrichter im Prinzipschaltbild Fig. 2 enthält nur ein Zweigpaar mit den Transistoren 3 und 4, den antiparallelen Dioden 7 und 8, den Ansteuereinheiten 17 und 18 mit den Steuerleitungen 13 und 14. Die Eingangskapazität wird durch die beiden in Reihe geschalteten Kondensatoren 28 und 29 gebildet so, daß ein Mittelpunkt entsteht der als zweiter Pol für die Wechselspannung u_{w} genutzt werden kann. Durch Einschalten von 4 (Zustand Plus) entsteht ein positiver Anteil der Höhe +UE/2 im Spannungsverlauf der Wechselspannung u_{w}. Durch Einschalten von 3 (Zustand Minus) entsteht ein negativer Anteil der Höhe -UE/2 im Spannungsverlauf der Wechselspannung u_{w}. Wenn kein Transistor eingeschaltet ist und Laststrom fließt, entsteht ein Stromfluß über beide Dioden im Ausgangsgleichrichter und der Zustand Null wird erzeugt. In einer Schaltperiode werden nacheinander die vier Schaltzustände 4 ein, 3 und 4 aus, 3 ein, 3 und 4 aus eingestellt.

Das Prinzipschaltbild eines bekannten Steuerungsverfahrens in Fig. 3 gilt für einen Gleichstromumrichter entsprechend Fig 1. Der Sägezahngenerator 34 liefert eine sägezahnförmige Hilfsspannung u_{hz}, die in einem Vergleichsglied 33 von der Steuerspannung us subtrahiert wird. Das Zweipunktglied 32 bildet aus der Differenz ein digitales Signal z₀. Die Ansteuerlogik 31 erzeugt daraus die Ansteuersignale in den Ansteuerleitungen 11, 12, 13, 14.

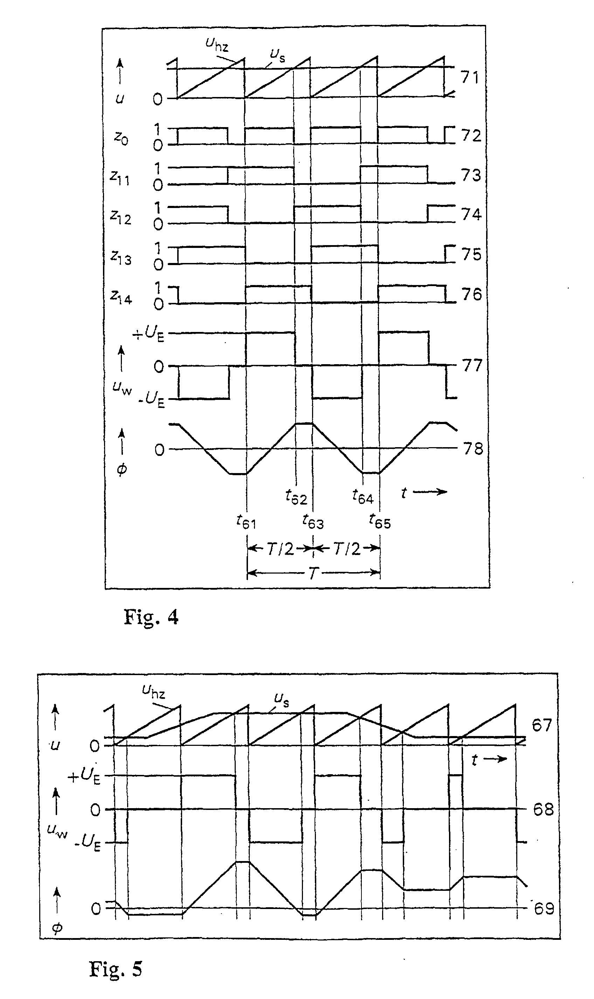

Die Wirkungsweise dieses bekannten Steuerungsverfahrens soll mit Hilfe der Kurvenverläufe in Fig. 4 erläutert werden. Dort und in allen folgenden Zeitdiagrammen sind Zeitpunkte durch den Kleinbuchstaben t mit Index gekennzeichnet und Zeitintervalle durch den Großbuchstaben T ohne oder mit Index. Das Diagramm 71 zeigt den Verlauf der sägezahnförmigen Hilfsspannung u_{hz} und den Verlauf der Steuerspannung uₛ bei konstanter Aussteuerung. Das Ausgangssignal z₀ des Zweipunktglieds im Diagramm 72 nimmt immer dann den logischen Wert 1 an, wenn die Steuerspannung größer ist als die Sägezahnspannung. Die Dauer der logischen Zustände 1 verändert sich dadurch proportional zur Steuerspannung. Die Diagramme 73 bis 76 zeigen den zeitlichen Verlauf der logischen Zustände z11 bis z14 für Phasenverschiebungssteuerung in den Ansteuerleitungen 11 bis 14. Vom Zeitpunkt t₆₁ bis zum Zeitpunkt t₆₂ werden dadurch die Transistoren 1 und 4 eingeschaltet, vom Zeitpunkt t₆₂ bis zum Zeitpunkt t₆₃ die Transistoren 2 und 4, vom Zeitpunkt t₆₃ bis zum Zeitpunkt t₆₄ die Transistoren 2 und 3 und vom Zeitpunkt t₆₄ bis zum Zeitpunkt t₆₅ die Transistoren 1 und 3. Dies ist genau die oben beschriebene Schaltfolge, welche zum zeitlichen Verlauf 77 der Wechselspannung u_{w} führt, wobei durch Änderung der Steuerspannung uₛ die Dauer der Nullspannung im Verlauf 77 variiert wird. Die Periodendauer T der Ausgangswechselspannung umfaßt genau 2 Perioden der sägezahnförmigen Hilfsspannung, die Dauer eines Sägezahns entspricht also T/2. Der Verlauf der Ausgangsgleichspannung u_{A} entspricht dem Verlauf 72 und ist in Fig. 4 nicht gesondert dargestellt. Der symmetrische Verlauf 77 führt wegen der Beziehung ø ~ ∫u_{w}dt zum trapezförmigen Verlauf 78 des Flusses ø im Transformator.

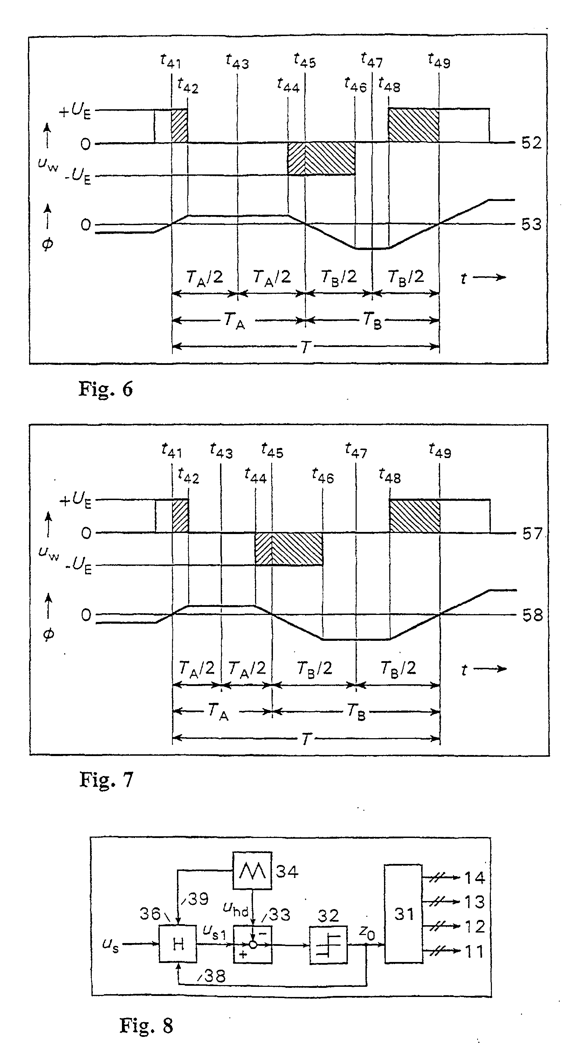

Dieser um die Nullinie symmetrische Verlauf wird bei diesem Steuerverfahren jedoch durch dynamische Änderungen der Steuerspannung gestört, wie aus Fig. 5 hervorgeht, wo im Diagramm 67 ein impulsförmiger Verlauf der Steuerspannung uₛ angenommen wurde. Die durch das Steuerverfahren eingeprägte Art, mit der die Nullzustände vorgegeben werden, führt zum Verlauf 68 der Wechselspannung u_{w} und damit zum Verlauf 69 des Transformatorflusses ø. Nach Ende des Impulses der Aussteuerung hat sich der Fluß ø verlagert. Weitere Impulse der Aussteuerung führen zu weiterer Verlagerung. In der Literaturstelle /1/ werden Maßnahmen erläutert, wie das Verfahren abgewandelt werden kann, um diese Verlagerungen zu vermeiden; die dort beschriebenen Zusatzmaßnahmen sind jedoch relativ kompliziert und können nicht überall eingesetzt werden.

Mit einem nach Anspruch 1 aufgebauten Verfahren, wird die Verlagerung des Flusses im Ansatz vermieden. Dies soll zunächst an Hand von Fig. 6 für eine konstante Periodendauer erläutert werden. Die Pulsperiode T von t₄₁ bis t₄₉ wird gemäß Anspruch 1 in den Zeitabschnitt A von t₄₁ bis t₄₅ und den Zeitabschnitt B von t₄₅ bis t₄₉ unterteilt, wobei die Dauern T_{A} und T_{B} der beiden Zeitabschnitte zunächst gleich groß angenommen werden. Im Zeitabschnitt A wird die Umschaltung vom Zustand Plus auf den Zustand Null und danach vom Zustand Null auf den Zustand Minus vorgenommen, im Zeitabschnitt B die Umschaltung vom Zustand Minus auf den Zustand Null und danach vom Zustand Null auf den Zustand Plus. Diese Definition der Teilabschnitte ist unüblich. In bekannten Verfahren werden die Spannungspulse, also die Umschaltungen von Zustand Null auf den Zustand Plus und zurück auf den Zustand Null bzw. die Umschaltungen von Zustand Null auf den Zustand Minus und zurück auf den Zustand Null, zu einem Zeitabschnitt zusammengefaßt. Gemäß Anspruch 1 wird nun außerdem das Zeitintervall vom Umschalten auf den Zustand Minus (Zeitpunkt t₄₄) bis zum Ende des Zeitabschnitts A (Zeitpunkt t₄₅) gleich groß vorgegeben wie das Zeitintervall vom Beginn des Zeitabschnitts A (Zeitpunkt t₄₁) bis zum Umschalten auf den Zustand Null (Zeitpunkt t₄₂); und außerdem wird das Zeitintervall vom Umschalten auf den Zustand Plus (Zeitpunkt t₄₈) bis zum Ende des Zeitabschnitts B (Zeitpunkt t₄₉) gleich groß vorgegeben wie das Zeitintervall vom Beginn des Zeitabschnitts B (Zeitpunkt t₄₅) bis zum Umschalten auf den Zustand Null (Zeitpunkt t₄₆). Das Verfahren führt dazu, daß die erste Umschaltung stets in der ersten Hälfte und die zweite Umschaltung stets in der zweiten Hälfte des jeweiligen Zeitabschnitts A oder B stattfindet. Es entsteht der zeitliche Verlauf 52 der Wechselspannung u_{w} und der Verlauf 53 des Transformatorflusses ø. Die Steuervorschrift bewirkt, daß die beiden gleich schraffierten Spannungszeitflächen vom Zeitpunkt t₄₁ bis zum Zeitpunkt t₄₂ und vom Zeitpunkt t₄₄ bis zum Zeitpunkt t₄₅ vom Betrag her gleich groß sind und sich nur im Vorzeichen unterscheiden. Dasselbe gilt für die beiden in anderer Richtung schraffierten Spannungszeitflächen vom Zeitpunkt t₄₅ bis zum Zeitpunkt t₄₆ und vom Zeitpunkt t₄₈ bis zum Zeitpunkt t₄₉. Dies führt im Zeitabschnitt A von t₄₁ bis t₄₅ zu einem trapezförmigen Verlauf des Flusses ø in positiver Richtung und im Zeitabschnitt B von t₄₅ bis t₄₉ zu einem trapezförmigen Verlauf des Flusses ø in negativer Richtung. Nach jedem Zeitabschnitt A oder B ist der Transformatorfluß wieder auf seinen Anfangswert zurückgekehrt.

Diese Rückkehr wird durch das erfindungsgemäße Verfahren in jedem Zeitabschnitt erzwungen. Dabei können in weiterer Ausgestaltung der Erfindung die Dauer der Zeitabschnitte (z.B. Zeitabschnitt A von t₄₁ bis t₄₅ und Zeitabschnitt B von t₄₅ bis t₄₉) zusätzlich zur Dauer bis zur ersten Umschaltung (t₄₁ bis t₄₂ bzw. t₄₅ bis t₄₆) frei gewählt und an die jeweiligen Betriebsbedingungen angepaßt werden. Die Dauer der Zeitintervalle t₄₄ bis t₄₅ bzw. t₄₈ bis t₄₉ müssen dabei entsprechend Anspruch 1 eingestellt werden. Ein Beispiel für diese Variation der Dauer der Zeitabschnitte A und B ist in Fig.7 dargestellt. Ein stark verkürzter Zeitabschnitt A von t₄₁ bis t₄₅ und ein verlängerter Zeitabschnitt B von t₄₅ bis t₄₉ sind dort in einer Schaltperiode vereinigt. Der Verlauf 57 der Wechselspannung u_{w} führt zum Verlauf 58 des Transformatorflusses ø, wobei auch hier die Rückkehr des Flusses nach jedem Zeitabschnitt A bzw. B stattfindet.

Die Änderung der Dauer eines Zeitabschnitts A oder B kann in weiterer Ausgestaltung der Erfindung auch noch nach der ersten Umschaltung innerhalb dieses Zeitabschnitts erfolgen. Tritt dort eine sprunghafte Vergrößerung der Steuerspannung ein, so kann man beispielsweise sofort den aktiven Schaltzustand (Zustand Plus bzw. Zustand Minus) einschalten und die Dauer des Zeitabschnitts entsprechend anpassen.

Derartige Änderungen der Zeitintervalle lassen sich am besten mit digitalen Steuerungen und Regelungen verwirklichen wie sie insbesondere in den Merkmalen der Ansprüche 7 und 11 beschrieben sind.

Aber auch mit analogen Mitteln ist das Verfahren realisierbar, was in weiterer Ausgestaltung der Erfindung durch die Merkmale des Anspruchs 6 beschrieben wird. Fig. 8 zeigt ein Prinzipschaltbild, das diesen Merkmalen entspricht. Das Vergleichsglied 33, das Zweipunktglied 32 und die Ansteuerlogik 31 können genau so aufgebaut sein wie im bekannten Verfahren entsprechend Fig. 3. Als Hilfsspannung wird jedoch eine dreieckförmige Spannung u_{hd} verwendet, die von einem Dreieckgenerator 34 geliefert wird. Die Steuerspannung uₛ wird mit dem Halteglied 36 in eine abgewandelte Steuerspannung uₛ₁ umgewandelt, und letztere dem Vergleichsglied 33 zugeführt. Bei jedem Umschalten des Zeipunktglieds 32 vom logischen Zustand 0 auf den logischen Zustand 1 wird über ein Haltesignal in der Leitung 38, der im Zeitpunkt der Umschaltung vorhandene Wert der Steuerspannung us im Halteglied 36 festgehalten und als abgewandelte Steuerspannung uₛ₁ weitergegeben. Erst wenn das Minimum der Dreieckhilfsspannung erreicht ist wird über die Leitung 39 ein Freigabesignal an das Halteglied gegeben, wodurch die Steuerspannung uₛ in ihrem aktuellen Verlauf wieder auf die abgewandelte Steuerspannung uₛ₁ durchgeschaltet wird.

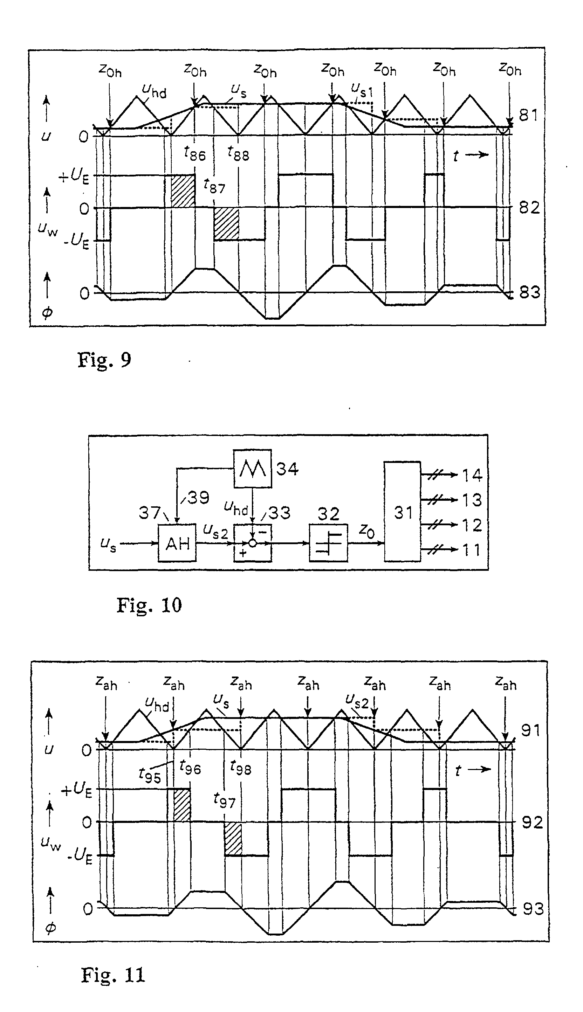

Für einen impulsförmigen Verlauf der Steuerspannung entsprechend Fig. 5 sind in Fig. 9 die Verläufe bei Anwendung der Steuereinrichtung nach Fig. 8 eingezeichnet. Das Diagramm 81 zeigt die Dreieckhilfsspannung u_{hd}, die Steuerspannung uₛ und gestrichelt die abgewandelte Steuerspannung uₛ₁. Die Zeitpunkte, in denen der ansteigende Ast der Dreieckhilfsspannung die Steuerspannung schneidet, sind im Diagramm durch die senkrechten Pfeile z₀ₕ gekennzeichnet. Ab dort (z.B. im Zeitpunkt t₈₆) wird die abgewandelte Steuerspannung konstant gehalten. Damit wird erreicht, daß der Schnittpunkt mit dem abfallenden Ast der Dreieckspannung (z.B. im Zeitpunkt t₈₇) auf gleicher Höhe liegt so, daß die Merkmale des Anspruchs 1 eingehalten werden. In den Minimalwerten der Dreieckspannung (z.B. im Zeitpunkt t₈₈) wird die abgewandelte Steuerspannung uₛ₁ wieder auf den laufenden Wert der Steuerspannung gesetzt. Der Verlauf 82 der Wechselspannung u_{w} zeigt in jedem Zeitabschnitt A oder B je zwei Spannungszeitflächen (im Beispiel schraffiert), die umgekehrt gleich groß sind. Damit ergibt sich im Diagramm 83 beim Verlauf des Flusses ø die Rückkehr zum Ausgangswert (z.B. im Zeitpunkt t₈₈). Eine Verschiebung des Flusses kann nicht stattfinden. Das Verfahren zeigt sehr gute dynamische Eigenschaften, da in jedem Zeitabschnitt die abgewandelte Steuerspannung bis zur ersten Umschaltung der vorgegebenen Steuerspannung folgt und erst danach die für die Rückkehr des Flusses notwendigen Abweichungen auftreten.

Wenn man etwas geringere dynamische Eigenschaften zuläßt, kann man die Merkmale des Anspruchs 1 auch mit einem üblichen Abstasthalteglied erreichen, in dem man die Steuereinrichtung nach den Merkmalen des Anspruchs 7 aufbaut, wie es im Prinzipschaltbild Fig. 10 als Beispiel gezeigt ist. Das Vergleichsglied 33, das Zweipunktglied 32, die Ansteuerlogik 31, der Dreieckgenerator 34 und die Leitung 39 können aufgebaut sein wie in Fig. 8. Aus der Steuerspannung uₛ wird mittels des Abtasthalteglieds 37 eine Stufenspannung uₛ₂ gebildet, die dem Vergleichsglied 33 zugeführt wird. Das Steuersignal in der Leitung 39 bewirkt, daß der Wert der Steuerspannung uₛ stets zum Zeitpunkt des Minimums der Dreieckspannung abgetastet, festgehalten und als Stufenspannung uₛ₂ weitergegeben wird.

Für einen impulsförmigen Verlauf der Steuerspannung wie in Fig. 5 sind in Fig. 11 die durch die Steuereinrichtung nach Fig. 10 erzeugten Verläufe dargestellt. Diagramm 91 zeigt die Dreieckhilfsspannung u_{hd}, die Steuerspannung uₛ und die Stufenspannung uₛ₂. Jeweils im Minimum der Dreickspannung wird die Stufenspannung auf den aktuellen Wert der Steuerspannung gesetzt und dann bis zum nächsten Minimum der Dreieckspannung konstant gehalten. Die Abtastungen sind durch die Pfeile zₐₕ gekennzeichnet. Auch hier treten im Verlauf 92 der Wechselspannung u_{w} stets umgekehrt gleiche Spannungszeitflächen auf, z.B. die beiden schraffierten Flächen von t₉₅ bis t₉₆ und von t₉₇ bis t₉₈. Dadurch findet im Verlauf 93 des Flusses φ auch hier die Rückkehr zum Ausgangswert statt, z.B. im Zeitpunkt t₉₈, und eine Verlagerung des Flusses ist verhindert. Die Dynamik der Steuereinrichtung von Fig. 8 wird durch die Steuereinrichtung nach Fig. 10 nicht ganz erreicht, da der Stufenwert früher festgelegt wird. Dafür ist der Aufwand etwas geringer.

Auch mit den Steuereinrichtungen nach Anspruch 6 und 7 läßt sich in weiterer Ausgestaltung der Erfindung eine Anpassung der Zeitabschnitte an die Betriebsbedingungen verwirklichen. Hierzu kann man entsprechend Anspruch 8, den Dreieckgenerator 34 so ausführen, daß die Steigung der Dreieckspannung variabel ist. Die Änderung der Steigung muß dann stets in den Abtastzeitpunkten, d.h. im Minimum der Dreickspannung erfolgen, wobei die Anstiegsflanke und die Abfallflanke des darauf folgenden Dreiecks den gleichen Betrag aufweisen müssen.

### Gewerbliche Anwendbarkeit:

Das erfindungsgemäße Verfahren und die Vorrichtung sind insbesondere zum Aufbau von Gleichstromumrichtern für die Elektroschweißtechnik gewerblich anwendbar. Die Nützlichkeit besteht darin, daß aufgrund des erfindungsgemäßen Verfahrens die durch dynamische Vorgänge verursachte Flußverlagerung im Transformator sicher verhindert wird.

## Patentansprüche

1. Verfahren zum Steuern eines Gleichstromumrichters mit Wechselspannungs-Zwischenkreis nach dem Prinzip des Durchflußwandlers bestehend aus einem Wechselrichter (21) mit eingeprägter Gleichspannung, einem Transformator (22) und einem Gleichrichter (23), wobei der Wechselrichter (21) die drei Spannungszustände positive Spannung (+U_{E}, Zustand Plus), negative Spannung (-U_{E}, Zustand Minus) und Spannung Null (0, Zustand Null) liefern kann und eine Wechselspannung erzeugt, deren Perioden aus je einem Zeitintervall mit positiver und negativer Spannung und jeweils einem dazwischen liegenden Zeitintervall mit der Spannung Null bestehen,
**dadurch gekennzeichnet,**
**daß** zur Steuerung des Wechselrichters die Schaltperiode desselben in zwei Zeitabschnitte unterteilt wird, wobei in einem Zeitabschnitt (A) die Umschaltungen vom Zustand Plus auf den Zustand Null (t₄₂) und danach vom Zustand Null auf den Zustand Minus (t₄₄) erfolgen und dabei das Zeitintervall vom Umschalten auf den Zustand Minus (t₄₄) bis zum Ende des Zeitabschnitts A (t₄₅) gleich groß vorgegeben wird wie das Zeitintervall vom Beginn des Zeitabschnitts A (t₄₁) bis zum Umschalten auf den Zustand Null (t₄₂), und im anderen Zeitabschnitt (B) die Umschaltungen vom Zustand Minus (t₄₆) auf den Zustand Null und danach vom Zustand Null auf den Zustand Plus (t₄₈) erfolgen und dabei das Zeitintervall vom Umschalten auf den Zustand Plus (t₄₈) bis zum Ende des Zeitabschnitts B (t₄₉) gleich groß vorgegeben wird wie das Zeitintervall vom Beginn des Zeitabschnitts B (t₄₅) bis zum Umschalten auf den Zustand Null (t₄₆), wobei entweder die Dauer der Zeitabschnitte A und B konstant gehalten wird oder die Dauer der Zeitabschnitte A und B an die Betriebserfordernisse angepaßt werden und insbesondere bei dynamischen Vorgängen die Dauer verkürzt werden, wobei auch unterschiedliche Dauern der Zeitabschnitte A und B eingestellt werden.

2. Verfahren nach Anspruch 1, **dadurch gekennzeichnet,**
**daß** die Dauer eines Zeitabschnitts auch nach der ersten Umschaltung in diesem Zeitabschnitt verändert wird.

3. Verfahren nach einem der Ansprüche 1 oder 2 mit digitalen Steuerungsmitteln, **dadurch gekennzeichnet,**
**daß** die Dauer jedes Zeitabschnitts und die beiden Umschaltzeitpunkte innerhalb dieses Zeitabschnitts laufend auf Grund eines Steuerspannungsverlaufs berechnet und mittels eines Zeitwerks eingestellt werden, wobei der Zeitabstand zwischen der zweiten Umschaltung bis zum Ende des Zeitabschnitts gleich groß gesetzt wird wie der Zeitabstand vom Beginn dieses Zeitabschnitt bis zur ersten Umschaltung.

4. Verfahren nach Anspruch 1 mit analogen Hilfs- bzw. Steuerungsmitteln,
**dadurch gekennzeichnet,**
**daß** in der Steuerung des Wechselrichters eine symmetrische, dreieckförmige Hilfsspannung mit gleich großen Anstiegs- und Abfallzeiten und doppelter Frequenz der Wechselrichter-Ausgangsspannung erzeugt wird und daß das Einschalten des Zustands Null jeweils im Schnittpunkt einer Steuerspannung mit der ansteigenden Flanke der Dreieckhilfsspannung erfolgt und die Größe der Steuerspannung im Schnittpunkt festgehalten wird und daß die darauf folgende Umschaltung auf den Zustand Plus bzw. den Zustand Minus im Schnittpunkt der festgehaltenen Spannung und der nachfolgenden abfallenden Flanke der Dreieckhilfsspannung erfolgt.

5. Verfahren nach einem oder mehreren der Ansprüche 1 bis 4 mit analogen Hilfsmitteln, **dadurch gekennzeichnet,**
**daß** eine stufenförmige Steuerspannung verwendet wird, die nur in den Zeitpunkten des Tiefstwertes der Dreieckhilfsspannung sprunghaft geändert und dann bis zum nächsten Sprungzeitpunkt konstant gehalten wird, und daß in den Schnittpunkten der stufenförmigen Steuerspannung mit der ansteigenden Flanke der Dreieckhilfsspannungen die Umschaltungen auf den Zustand Null und in den Schnittpunkten mit der abfallenden Flanke die Umschaltung auf den Zustand Plus bzw. Minus erfolgt.

6. Verfahren nach einem der Ansprüche 4 oder 5, **dadurch gekennzeichnet,**
**daß** die Steigung der Dreieckhilfsspannung in den Zeitpunkten, in denen der Minimalwert der Dreieckhilfsspannung auftritt, geändert wird.

7. Verfahren nach einem oder mehreren der Ansprüche 1 bis 6,
**dadurch gekennzeichnet, daß** die von der Steuerspannung abhängigen Umschaltzeitpunkte der Wechselrichterausgangsspannung mit einer digitalisierten Steuerspannung, die sich nur in den Tiefstwerten der Dreieckhilfsspannung ändert, einem Auf- und Abwärtszähler und einem digitalen Komparator erzeugt werden.

8. Verfahren nach einem oder mehreren der Ansprüche 1 bis 7,
**dadurch gekennzeichnet, daß** die Steuerspannung einen Mindestwert der Steuernennspannung nicht unterschreitet.

9. Vorrichtung zum Steuern eines Gleichstromumrichters mit Wechselspannungs-Zwischenkreis nach dem Prinzip des Durchflußwandlers bestehend aus einem Wechselrichter (21) mit eingeprägter Gleichspannung, einem Transformator (22) und einem Gleichrichter (23), wobei der Wechselrichter (21) die drei Spannungszustände positive Spannung (+U_{E}, Zustand Plus), negative Spannung (-U_{E}, Zustand Minus) und Spannung Null (0, Zustand Null) zu liefern imstande ist und eine Wechselspannung erzeugt, deren Perioden aus je einem Zeitintervall mit positiver und negativer Spannung und jeweils einem dazwischen liegenden Zeitintervall mit der Spannung Null bestehen,
**dadurch gekennzeichnet,**
**daß** die Steuerung des Wechselrichters in der Weise erfolgt, daß die Schaltperiode des Wechselrichters in zwei Zeitabschnitte unterteilt ist, wobei in einem Zeitabschnitt (A) die Umschaltungen vom Zustand Plus auf den Zustand Null (t₄₂) und danach vom Zustand Null auf den Zustand Minus (t₄₄) erfolgen und dabei das Zeitintervall vom Umschalten auf den Zustand Minus (t₄₄) bis zum Ende des Zeitabschnitts A (t₄₅) gleich groß vorgegeben ist wie das Zeitintervall vom Beginn des Zeitabschnitts A (t₄₁) bis zum Umschalten auf den Zustand Null (t₄₂), und im anderen Zeitabschnitt (B) die Umschaltungen vom Zustand Minus (t₄₆) auf den Zustand Null und danach vom Zustand Null auf den Zustand Plus (t₄₈) erfolgen und dabei das Zeitintervall vom Umschalten auf den Zustand Plus (t₄₈) bis zum Ende des Zeitabschnitts B (t₄₉) gleich groß vorgegeben ist wie das Zeitintervall vom Beginn des Zeitabschnitts B (t₄₅) bis zum Umschalten auf den Zustand Null (t₄₆), wobei entweder die Dauer der Zeitabschnitte A und B konstant gehalten wird oder
die Dauer der Zeitabschnitte A und B an die Betriebserfordernisse angepaßt werden und insbesondere bei dynamischen Vorgängen die Dauer verkürzt werden, wobei auch unterschiedliche Dauern der Zeitabschnitte A und B eingestellt werden.

## Claims

1. A process for controlling a direct current converter with an alternating voltage link according to the principle of a feed forward converter, consisting of an inverter (21) with impressed direct voltage, of a transformer (22) and of a rectifier (23), whereby the inverter (21) can supply the three voltage states, namely, positive voltage (+U_{E}, plus state), negative voltage (-U_{E}, minus state) and zero voltage (0, zero state), and it generates an alternating voltage whose periods each consist of a time interval with positive and negative voltage, each with a time interval with the zero voltage in-between,
**characterized in that**,
in order to control the inverter, the switching period thereof is divided into two time intervals, whereby in the time interval (A), the switchovers take place from the plus state to the zero state (t₄₂) and subsequently from the zero state to the minus state (t₄₄) and thus, the time interval from the switchover to the minus state (t₄₄) until the end of the time interval A (t₄₅) is specified at the same value as the time interval from the beginning of the time interval A (t₄₁) until the switchover to the zero state (t₄₂), and in the other time interval (B), the switchovers take place from the minus state (t₄₆) to the zero state and subsequently from the zero state to the plus state (t₄₈), and here, the time interval from the switchover to the plus state (t₄₈) until the end of the time interval B (t₄₉) is specified at the same value as the time interval from the beginning of the time interval B (t₄₅) until the switchover to the zero state (t₄₆), whereby either the duration of the time intervals A and B are kept constant or else the durations of the time intervals A and B are adapted to the operating requirements and, especially with dynamic processes, the durations are shortened, whereby different durations of the time intervals A and B are also set.

2. The process according to Claim 1, **characterized in that** the duration of a time interval is also changed after the first switchover in this time interval.

3. The process according to one of Claims 1 or 2 with digital control means, **characterized in that** the duration of each time interval and the two switchover times are continuously calculated within this time interval on the basis of a control voltage curve and are set by means of a timer, whereby the time interval between the second switchover until the end of the time interval is set at an equal value as the time interval from the beginning of this time interval until the first switchover.

4. The process according to Claim 1 with analog auxiliary or control means, **characterized in that**, in the controls of the inverter, a symmetrical, triangular auxiliary voltage with rise and decay times of equal magnitude and double frequency of the inverter output voltage is generated and **in that** each instance of switching on the zero state takes place in the intersection of a control voltage with the rising slope of the triangular auxiliary voltage, and the magnitude of the control voltage in the intersection is determined and **in that** the next switchover to the plus state or to the minus state takes place in the intersection of the determined voltage and of the subsequent decaying slope of the triangular auxiliary voltage.

5. The process according to one or more of Claims 1 to 4 with analog auxiliary means,
**characterized in that** a graduated control voltage is used that is only changed stepwise at the times of the minimum value of the triangular auxiliary voltage and is then kept constant until the next step time, and **in that** the switchovers to the zero state take place in the intersections of the graduated control voltage with the rising slope of the triangular auxiliary voltage, and the switchover to the plus state or to the minus state takes place in the intersections with the decaying slope.

6. The process according to one of Claims 4 or 5, **characterized in that** the rise of the triangular auxiliary voltage is changed at the times in which the minimum value of the triangular auxiliary voltage occurs.

7. The process according to one or more of Claims 1 to 6, **characterized in that** the switchover times of the inverter output voltage, which are dependent on the control voltage, are generated with a digitized control voltage that only changes at the lowest values of the triangular auxiliary voltage, with an up counter and a down counter, and with a digital comparator.

8. The process according to one or more of Claims 1 to 7, **characterized in that** the control voltage does not fall below a minimum value of the rated control voltage.

9. A device for controlling a direct current converter with an alternating voltage link according to the principle of a feed forward converter, consisting of an inverter (21) with impressed direct voltage, of a transformer (22) and of a rectifier (23), whereby the inverter (21) can supply the three voltage states, namely, positive voltage (+U_{E}, plus state), negative voltage (-U_{E}, minus state) and zero voltage (0, zero state), and it generates an alternating voltage whose periods each consist of a time interval with positive and negative voltage, each with a time interval with the zero voltage in-between,
**characterized in that**,
the control of the inverter takes place in such a way that the switching period of the inverter is divided into two time intervals, whereby in the time interval (A), the switchovers take place from the plus state to the zero state (t₄₂) and subsequently from the zero state to the minus state (t₄₄) and thus, the time interval from the switchover to the minus state (t₄₄) until the end of the time interval A (t₄₅) is specified at the same value as the time interval from the beginning of the time interval A (t₄₁) until the switchover to the zero state (t₄₂), and in the other time interval (B), the switchovers take place from the minus state (t₄₆) to the zero state and subsequently from the zero state to the plus state (t₄₈), and here, the time interval from the switchover to the plus state (t₄₈) until the end of the time interval B (t₄₉) is specified at the same value as the time interval from the beginning of the time interval B (t₄₅) until the switchover to the zero state (t₄₆), whereby either the duration of the time intervals A and B are kept constant or else the durations of the time intervals A and B are adapted to the operating requirements and, especially with dynamic processes, the durations are shortened, whereby different durations of the time intervals A and B are also set.

## Revendications

1. Méthode pour la commande d'un convertisseur de courant continu avec circuit intermédiaire de tension alternative d'après le principe d'un convertisseur de flux, consistant en un onduleur (21) avec tension continue appliquée, un transformateur (22) et un redresseur de courant (23), l'onduleur (21) pouvant fournir les trois états de tension, tension positive (+U_{E}, état plus), tension négative (-U_{E}, état moins) et tension nulle (0, état zéro) et produire une tension alternative dont les périodes consistent chacune en un intervalle de temps ayant une tension positive et négative et à chaque fois un intervalle de temps intermédiaire avec la tension nulle, **caractérisé en ce que**
pour la commande de l'onduleur, la période de commutation de ce dernier est divisée en deux tranches de temps, dans l'une des tranches de temps (A) se produisent les commutations de l'état plus à l'état moins (t₄₂), et ensuite de l'état zéro à l'état moins (t₄₄) et ce faisant, l'intervalle de temps depuis la commutation à l'état moins (t₄₄) jusqu'à la fin de la tranche de temps A (t₄₅) étant déterminé comme étant aussi grand que l'intervalle de temps depuis le début de la tranche de temps A (t₄₁) jusqu'à la commutation à l'état zéro (t₄₂), et dans l'autre tranche de temps (B) se produisent les commutations de l'état moins (t₄₆) à l'état zéro et ensuite de l'état zéro à l'état plus (t₄₈), et ce faisant, l'intervalle de temps depuis la commutation à l'état plus (t₄₈) jusqu'à la fin de la tranche de temps B (t₄₉) étant déterminé comme étant aussi grand que l'intervalle de temps depuis le début de la tranche de temps B (t₄₅) jusqu'à la commutation à l'état zéro, ou bien la durée des tranches de temps A et B étant maintenue constante, ou bien la durée des tranches de temps A et B étant adaptée aux conditions de fonctionnement requises et en particulier au cours de processus dynamiques les durées étant abrégées, des durées différentes des tranches de temps A et B pouvant être réglées.

2. Méthode selon la revendication 1, **caractérisée en ce que**
la durée d'une tranche de temps peut être modifiée dans cette tranche de temps, aussi après la première commutation.

3. Méthode selon l'une quelconque des revendications 1 ou 2 avec moyens de commande numériques, **caractérisée en ce que**
la durée de chaque tranche de temps et les deux points de commutation à l'intérieur de cette tranche de temps sont calculés en permanence en vertu de l'allure de la tension de commande et réglés au moyen d'une minuterie, le laps de temps entre la deuxième commutation jusqu'à la fin de la tranche de temps étant fixé comme étant aussi grand que le laps de temps depuis le début de cette tranche de temps jusqu'à la première commutation.

4. Méthode selon la revendication 1 avec moyens de commande ou auxiliaires analogiques, **caractérisée en ce que**
dans la commande de l'onduleur, est produite une tension auxiliaire symétrique triangulaire avec des temps de montée et de descente de même grandeur et avec une fréquence double de la tension de sortie de l'onduleur, et que l'établissement de l'état zéro se produit à chaque fois au point d'intersection d'une tension de commande avec le flanc à pente ascendante de la tension auxiliaire triangulaire et que la grandeur de la tension de commande au point d'intersection est fixée et **en ce que** la commutation subséquente à l'état plus ou à l'état moins se produit au point d'intersection de la tension fixée et du flanc en pente descendante suivant de la tension auxiliaire triangulaire.

5. Méthode selon l'une ou plusieurs des revendications 1 à 4 avec des moyens auxiliaires analogiques, **caractérisée en ce que**
une tension de commande en forme de paliers est utilisée qui est modifiée de façon abrupte uniquement aux moments de la valeur la plus basse de la tension auxiliaire triangulaire et maintenue ensuite constante jusqu'au moment de transition suivant, et **en ce que** aux points d'intersection de la tension de commande en forme de paliers, les commutations à l'état zéro se produisent avec le flanc en pente ascendante des tensions auxiliaires triangulaires, et que la commutation à l'état plus ou moins se produit aux points d'intersection avec le flanc en pente descendante.

6. Méthode selon l'une quelconque des revendications 4 ou 5,
**caractérisée en ce que**
la pente ascendante de la tension auxiliaire triangulaire est modifiée aux moments dans lesquels apparaît la valeur minimale de la tension auxiliaire triangulaire.

7. Méthode selon une ou plusieurs des revendications 1 à 6, **caractérisée en ce que**
les moments de commutation de la tension de sortie de l'onduleur qui dépendent de la tension de commande, sont produits avec une tension de commande numérisée qui se modifie uniquement aux valeurs les plus basses de la tension auxiliaire triangulaire, un incrémenteur-décrémenteur et un comparateur numérique.

8. Méthode selon l'une ou plusieurs des revendications 1 à 7,
**caractérisée en ce que** la tension de commande ne se situe pas en deça d'une valeur minima de la tension nominale de commande.

9. Dispositif pour la commande d'un convertisseur de courant continu avec circuit intermédiaire de tension alternative d'après le principe d'un convertisseur de flux, consistant en un onduleur (21) avec tension continue appliquée, un transformateur (22) et un redresseur de courant (23), l'onduleur (21) étant en mesure de fournir les trois états de tension, tension positive (+U_{E}, état plus), tension négative (-U_{E}, état moins) et tension nulle (0, état zéro) et produit une tension alternative dont les périodes consistent chacune en un intervalle de temps ayant une tension positive et négative et à chaque fois un intervalle de temps intermédiaire avec la tension nulle, **caractérisé en ce que**
la commande de l'onduleur est effectuée de manière à ce que la période de commutation de l'onduleur est divisée en deux tranches de temps, dans une tranche de temps (A) se produisent les commutations de l'état plus à l'état moins (t₄₂), et ensuite de l'état nul à l'état moins (t₄₄) et ce faisant, l'intervalle de temps depuis la commutation à l'état moins (t₄₄) jusqu'à la fin de la tranche de temps A (t₄₅) étant défini comme étant aussi grand que l'intervalle de temps depuis le début de la tranche de temps A (t₄₁) jusqu'à la commutation à l'état zéro (t₄₂), et dans l'autre tranche de temps (B) se produisent les commutations de l'état moins (t₄₆) à l'état zéro et ensuite de l'état zéro à l'état plus (t₄₈), et ce faisant, l'intervalle de temps depuis la commutation à l'état plus (t₄₈) jusqu'à la fin de la tranche de temps B (t₄₉) étant déterminé comme étant aussi grand que l'intervalle de temps depuis le début de la tranche de temps B (t₄₅) jusqu'à la commutation à l'état zéro, ou bien la durée des tranches de temps A et B étant maintenue constante, ou bien la durée des tranches de temps A et B étant adaptée aux conditions de fonctionnement requises et en particulier au cours de processus dynamiques les durées étant abrégées, des durées différentes des tranches de temps A et B pouvant être également réglées.
